# EUROPÄISCHE PATENTANMELDUNG

(11) **EP 3 091 371 A1**
(43) Veröffentlichungstag der Anmeldung: **09.11.2016**
(21) Anmeldenummer: 16167997.2
(22) Anmeldetag: 03.05.2016
(51) Int. Cl.: G01S 15/93, G01S 15/02, G01S 7/52, G01S 7/527, G01S 13/93

(54) **VERFAHREN ZUR BESTIMMUNG EINER DÄMPFUNG EINES ULTRASCHALLSIGNALS, FAHRERASSISTENZSYSTEM SOWIE KRAFTFAHRZEUG**

(30) Priorität: 05.05.2015 DE 102015106934
(71) Anmelder: Valeo Schalter und Sensoren GmbH, 74321 Bietigheim-Bissingen (DE)
(72) Erfinder: Eidel, Oliver, 74321 Bietigheim-Bissingen (DE); Hoerer, Martin, 74321 Bietigheim-Bissingen (DE); Wollny, Stefan, 74321 Bietigheim-Bissingen (DE); Hamm, Wolfgang, 74321 Bietigheim-Bissingen (DE)

(57) **Zusammenfassung**

Die Erfindung betrifft ein Verfahren zum Bestimmen einer Dämpfung (D) eines Ultraschallsignals (8) eines Ultraschallsensors (4) für ein Kraftfahrzeug (1) in einem Umgebungsbereich (7) des Kraftfahrzeugs (1), wobei bei dem Verfahren mittels eines fahrzeugseitigen Temperatursensors (9) eine aktuelle Temperatur (T) in dem Umgebungsbereich (7) des Kraftfahrzeugs (1) erfasst wird, wobei eine aktuelle Position (P) des Kraftfahrzeugs (1) erfasst wird, anhand der aktuellen Position (P) aus bereitgestellten Wetterdaten (11) eine aktuelle Luftfeuchtigkeit (F) in dem Umgebungsbereich (7) des Kraftfahrzeugs (1) bestimmt wird und anhand der aktuellen Luftfeuchtigkeit (F) und der aktuellen Temperatur (T) die Dämpfung (D) des Ultraschallsignals (8) in dem Umgebungsbereich (7) bestimmt wird. Die Erfindung betrifft außerdem ein Fahrerassistenzsystem (2) sowie ein Kraftfahrzeug (1).

## Beschreibung

Die Erfindung betrifft ein Verfahren zum Bestimmen einer Dämpfung eines Ultraschallsignals eines Ultraschallsensors für ein Kraftfahrzeug in einem Umgebungsbereich des Kraftfahrzeugs, wobei bei dem Verfahren mittels eines Temperatursensors eine aktuelle Temperatur in dem Umgebungsbereich des Kraftfahrzeugs erfasst wird. Die Erfindung betrifft außerdem ein Fahrerassistenzsystem sowie ein Kraftfahrzeug.

Es ist bereits aus dem Stand der Technik bekannt, Ultraschallsensoren an einem Kraftfahrzeug anzuordnen und mit diesen Ultraschallsensoren beispielsweise Objekte in einem Umgebungsbereich des Kraftfahrzeugs zu erfassen. Dazu wird von den Ultraschallsensoren ein Ultraschallsignal ausgesendet und das an dem Objekt reflektierte Ultraschallsignal wieder empfangen. Informationen über das erfasste Objekt, beispielsweise ein Abstand des Objektes zu dem Kraftfahrzeug, können einem Fahrerassistenzsystem des Kraftfahrzeugs, beispielsweise einem Parkassistenzsystem, bereitgestellt werden. Dabei beeinträchtigt vor allem eine Dämpfung des Ultraschallsignals in dem Umgebungsbereich des Kraftfahrzeugs, eine sogenannte Luftschalldämpfung, die Abstandsmessung, d. h. Objekte im Umgebungsbereich des Kraftfahrzeugs werden bei hoher Luftschalldämpfung unter Umständen nicht mehr erkannt.

Dabei ist es bekannt, dass sowohl eine Umgebungstemperatur als auch eine Luftfeuchtigkeit in dem Umgebungsbereich einen großen Einfluss auf die Luftschalldämpfung des Ultraschallsignals haben. Um die Luftschalldämpfung eines Ultraschallsensors zur Verbesserung der Messsicherheit des Ultraschallsensors berücksichtigen zu können, schlägt die DE 10 2008 054 047 A1 vor, Temperatursensoren und Luftfeuchtigkeitssensoren an dem Kraftfahrzeug anzuordnen, um die Temperatur und die Luftfeuchtigkeit des schallübertragenden Mediums, also der Luft im Umgebungsbereich, zu erfassen. Luftfeuchtigkeitssensoren sind in der Regel jedoch sehr teuer.

Es ist Aufgabe der vorliegenden Erfindung, die Dämpfung eines Ultraschallsignals besonders einfach und aufwandsarm bestimmen zu können.

Diese Aufgabe wird bestimmungsgemäß durch ein Verfahren, ein Fahrerassistenzsystem sowie ein Kraftfahrzeug mit den Merkmalen gemäß den unabhängigen Patentansprüchen gelöst.

Ein erfindungsgemäßes Verfahren dient zum Bestimmen einer Dämpfung eines Ultraschallsignals eines Ultraschallsensors für ein Kraftfahrzeug in einem Umgebungsbereich des Kraftfahrzeugs. Bei dem Verfahren wird mittels eines fahrzeugseitigen Temperatursensors eine aktuelle Temperatur in dem Umgebungsbereich des Kraftfahrzeugs erfasst. Darüber hinaus wird eine aktuelle Position des Kraftfahrzeugs erfasst, anhand der aktuellen Position aus bereitgestellten Wetterdaten eine aktuelle Luftfeuchtigkeit in dem Umgebungsbereich des Kraftfahrzeugs bestimmt und anhand der aktuellen Luftfeuchtigkeit und der aktuellen Temperatur die Dämpfung des Ultraschallsignals in dem Umgebungsbereich bestimmt.

Durch das erfindungsgemäße Verfahren wird also eine Luftschalldämpfung des Ultraschallsignals in dem Umgebungsbereich des Kraftfahrzeugs bestimmt beziehungsweise ermittelt. Durch die Dämpfung des Ultraschallsignals wird insbesondere eine Detektionsleistung beziehungsweise eine Detektionsreichweite des Ultraschallsensors beeinflusst. Je höher die Luftschalldämpfung ist, desto niedriger ist die Detektionsleistung beziehungsweise die Detektionsreichweite des Ultraschallsensors.

Zum Bestimmen der Dämpfung des Ultraschallsignals werden die die Dämpfung beeinflussenden Parameter des Umgebungsbereiches erfasst. Dabei wird als der eine beeinflussende Parameter die aktuelle Temperatur in dem Umgebungsbereich mit Hilfe des fahrzeugseitigen Temperatursensors beziehungsweise Temperaturfühlers erfasst. Die Luftfeuchtigkeit als der andere Parameter wird jedoch nicht, wie aus dem Stand der Technik bekannt, mittels eines Luftfeuchtigkeitssensors erfasst, sondern anhand der erfassten, aktuellen Position des Kraftfahrzeugs ermittelt. Die aktuelle Position kann beispielsweise von einer fahrzeugseitigen Erfassungseinrichtung erfasst werden. Aus einer bereitgestellten Wetterdatenbank werden die aktuellen Wetterdaten beziehungsweise die aktuellen Klimadaten an der aktuellen Position des Kraftfahrzeugs und damit die aktuellen Wetterdaten beziehungsweise die aktuellen Klimadaten in dem Umgebungsbereich ausgelesen. Die Wetterdaten umfassen dabei die aktuelle Luftfeuchtigkeit an der aktuellen Position des Kraftfahrzeugs. Damit ist auch die aktuelle Luftfeuchtigkeit in dem Umgebungsbereich des Kraftfahrzeugs bekannt. Anhand der gemessenen Temperatur sowie der ermittelten Luftfeuchtigkeit wird schließlich die Dämpfung des Ultraschallsignals in dem Umgebungsbereich bestimmt beziehungsweise berechnet.

Aus dem Verfahren ergibt sich der Vorteil, dass keine zusätzlichen Sensoren für das Kraftfahrzeug bereitgestellt werden müssen. Die Temperatur im Umgebungsbereich des Kraftfahrzeugs wird in der Regel standardmäßig mittels eines bereits am Kraftfahrzeug vorgesehenen Temperatursensors erfasst. Auch die aktuelle Position des Kraftfahrzeugs wird üblicherweise, beispielsweise für ein Navigationssystem des Kraftfahrzeugs, erfasst. Anhand dieser, insbesondere standardmäßig, erfassten Daten kann dann auf besonders einfache Weise die Dämpfung des Ultraschallsignals bestimmt werden, insbesondere ohne einen teuren Luftfeuchtigkeitssensor für das Kraftfahrzeug bereitstellen zu müssen.

Besonders bevorzugt wird die Position des Kraftfahrzeugs mittels eines globalen Positionsbestimmungssystems (GPS) bestimmt. Dazu weist das Kraftfahrzeug insbesondere ein GPS-Gerät auf, mittels welchem in an sich bekannter Weise, beispielsweise zur Navigation des Kraftfahrzeugs, die aktuelle Position des Kraftfahrzeugs in geographischen Koordinaten erfasst werden kann. Mittels GPS kann die Position des Kraftfahrzeugs besonders genau bestimmt werden und dadurch die aktuelle Luftfeuchtigkeit an dieser Position besonders genau erfasst werden.

Vorzugsweise wird die aktuelle Luftfeuchtigkeit mittels einer internetbasierten, die Wetterdaten bereitstellenden Wetterdatenbank bestimmt. Dazu kann das Kraftfahrzeug eine Auswerteeinrichtung, welche beispielsweise durch ein fahrzeugseitiges Steuergerät des Kraftfahrzeugs ausgebildet ist, aufweisen, welche dazu ausgelegt ist, auf das Internet zuzugreifen. Daraufhin können aus der Wetterdatenbank, beispielsweise in Form von einer das aktuelle Wetter anzeigenden Internetseite, das aktuelle Wetter beziehungsweise aktuelle Wetterinformationen an der, beispielsweise von dem GPS-Gerät, erfassten Position des Kraftfahrzeugs ausgelesen werden. Diese Wetterinformationen umfassen die aktuelle Luftfeuchtigkeit an der aktuellen Position. Aus einer internetbasierten Wetterdatenbank ergibt sich der Vorteil, dass diese ständig aktuell ist beziehungsweise aktualisiert wird. Es muss also nur die aktuelle Position des Kraftfahrzeugs bestimmt werden. Mittels dieser aktuellen Position können zu jeder Zeit aus dem Internet das aktuelle Wetter und damit die aktuelle Luftfeuchtigkeit sowie zur Überprüfung der gemessenen Temperatur auch die aktuelle Temperatur ausgelesen werden.

Gemäß einer Ausgestaltung der Erfindung wird zusätzlich ein aktuelles Kalenderdatum und/oder eine aktuelle Uhrzeit bestimmt. Dies ist besonders vorteilhaft, wenn als die Wetterdatenbank eine fahrzeuginterne und/oder eine fahrzeugexterne Wetterdatenbank bereitgestellt wird, innerhalb welcher zu vorbestimmten Datensätzen Luftfeuchtigkeitswerte vorgegeben werden, wobei jeder Datensatz eine vorbestimmte Position sowie eine vorbestimmte Uhrzeit und/oder ein vorbestimmtes Kalenderdatum umfasst, und anhand der erfassten aktuellen Positionen sowie der erfassten aktuellen Uhrzeit und/oder des erfassten aktuellen Kalenderdatums der zugehörige Luftfeuchtigkeitswert als die aktuelle Luftfeuchtigkeit bestimmt wird.

Eine solche fahrzeuginterne und/oder eine fahrzeugexterne Wetterdatenbank ist insbesondere eine Jahreswetterkarte, innerhalb welcher über einen Jahresverlauf und insbesondere auch über einen Tagesverlauf die Luftfeuchtigkeit an einem bestimmten Ort beziehungsweise einer bestimmten Position angezeigt wird. Diese Jahreswetterkarte kann beispielsweise Wetterdaten eines Vorjahres oder über mehrere Jahre gemittelte Wetterdaten, also Durchschnittswerte, umfassen. Anhand der bestimmten aktuellen Position kann dann die entsprechende Jahreswetterkarte herausgesucht werden und anhand der erfassten Uhrzeit und/oder des erfassten Kalenderdatums aus der herausgesuchten Jahreswetterkarte das Wetter und damit die Luftfeuchtigkeit zu der aktuellen Jahres- und/oder Tageszeit ausgelesen werden. Aus dieser Ausführungsform ergibt sich der Vorteil, dass die aktuelle Luftfeuchtigkeit auch dann bestimmt werden kann, wenn sich das Kraftfahrzeug beispielsweise in einem Funkloch befindet und keinen Zugriff auf das Internet und damit auf eine internetbasierte Wetterdatenbank hat.

Gemäß einer Weiterbildung der Erfindung wird in der fahrzeuginternen und/oder fahrzeugexternen Datenbank in jedem Datensatz zusätzlich ein vorbestimmter Temperaturwert vorgegeben, wobei zusätzlich anhand der erfassten Temperatur der dem entsprechenden Datensatz zugehörige Luftfeuchtigkeitswert als die aktuelle Luftfeuchtigkeit bestimmt wird. Da die fahrzeuginterne und/oder fahrzeugexterne Datenbank hier als eine Jahreswetterkarte mit vorbestimmten Wetterdaten ausgestaltet ist, kann anhand der erfassten Temperatur zusätzlich überprüft werden, ob die aktuelle Luftfeuchtigkeit plausibel beziehungsweise realistisch ist. Die ist insbesondere dann vorteilhaft, wenn zu bestimmten Positionen keine verlässlichen Wetterdaten angegeben werden können. Dies ist beispielsweise an Positionen der Fall, an welchen innerhalb eines Monats hohe Temperaturschwankungen auftreten können oder an Positionen, an welchen mehrere, zur gleichen Zeit erfasste Vorjahreswerte erheblich voneinander abweichen. An solchen Position können beispielsweise für verschiedene Temperaturen Luftfeuchtigkeitswerte angegeben werden, wobei derjenige, zu der erfassten aktuellen Temperatur korrespondierende Luftfeuchtigkeitswert als die aktuelle Luftfeuchtigkeit ausgewählt wird.

Vorzugsweise wird in Abhängigkeit der bestimmten Dämpfung des Ultraschallsignals eine Detektionsreichweite des Ultraschallsensors in dem Umgebungsbereich zum Erfassen von Objekten in dem Umgebungsbereich des Kraftfahrzeugs angepasst. Es ist bekannt, dass die Detektionsreichweite des Ultraschallsensors bei steigender Luftschalldämpfung des Ultraschallsignals sinkt. Dabei kann die Detektionsreichweite des Ultraschallsensors an die Luftschalldämpfung angepasst und in vorteilhafter Weise maximiert werden, insbesondere ohne dass sogenannte Bodenechos, also Reflexionen des Ultraschallsignals an einer Fahrbahn des Kraftfahrzeugs, als Signale und damit als Objekte in dem Umgebungsbereich des Kraftfahrzeugs erfasst werden.

Dabei kann es vorgesehen sein, dass die Detektionsreichweite angepasst wird, indem in Abhängigkeit der bestimmten Dämpfung des Ultraschallsignals eine Ansprechschwelle für den Ultraschallsensor bestimmt wird, wobei das von dem Ultraschallsensor empfangene Ultraschallsignal nur ausgewertet beziehungsweise zur Objekterfassung verwendet wird, wenn das Ultraschallsignal die Ansprechschwelle überschreitet. Anders ausgedrückt bedeutet dies, dass der Ultraschallsensor auf Ultraschallsignale, deren Signalstärke unterhalb der Ansprechschwelle liegt, nicht reagiert und somit Objekte in dem Umgebungsbereich, an welchen dieses Ultraschallsignal reflektiert wurde, nicht als solche erfasst werden.

Vorzugsweise wird als die Ansprechschwelle eine Signalstärke für das Ultraschallsignal bestimmt, welche das an einer Fahrbahn des Kraftfahrzeugs reflektierte Ultraschallsignal des Ultraschallsensors in seiner bestimmungsgemäßen Einbaulage des Ultraschallsensors am Kraftfahrzeug bei der bestimmten Dämpfung aufweist. Anders ausgedrückt bedeutet dies, dass die Signalstärke beziehungsweise ein Signalpegel beziehungsweise eine Signalamplitude des Ultraschallsignals, welche das Ultraschallsignal bei einem Bodenecho aufweist, als die Ansprechschwelle bestimmt wird. Da das Bodenecho nicht erfasst werden soll, wird ein reflektiertes Ultraschallsignal erst dann erfasst, wenn dessen Signalstärke die Ansprechschwelle überschreitet. Somit kann gewährleistet werden, dass das Ultraschallsignal an einem von der Fahrbahn unterschiedlichen Objekt reflektiert wurde. Somit können mit einer hohen Zuverlässigkeit Objekte in dem Umgebungsbereich erkannt werden und deren Abstand zu dem Kraftfahrzeug bestimmt werden. Die Informationen über die Objekte können beispielsweise einem Parkassistenzsystem bereitgestellt werden, welches einen Fahrer des Kraftfahrzeugs bei einem Einparkvorgang unterstützt.

Bevorzugt werden für vorbestimmte Dämpfungswerte Schwellwerte vorgegeben und in Abhängigkeit der bestimmten Dämpfung des Ultraschallsignals der zugehörige Schwellwert ausgewählt und als die Ansprechschwelle für den Ultraschallsensor bestimmt. Anders ausgedrückt bedeutet dies, dass Schwellwertsätze bestimmt werden, bei welchen den vorbestimmten Dämpfungswerten die Schwellwerte, beispielsweise in einer Liste oder in einer Kennlinie, zugeordnet sind. Diese Liste oder Kennlinie kann beispielsweise in einer fahrzeuginternen Speichereinrichtung hinterlegt sein. Anhand der mittels der aktuellen Luftfeuchtigkeit und der aktuellen Temperatur bestimmten Dämpfung des Ultraschallsignals kann dann auf besonders einfache Weise aus der Liste beziehungsweise der Kennlinie der zugehörige Schwellwert, beispielsweise von der Auswerteeinrichtung des Kraftfahrzeugs, ausgelesen und ausgewählt und als die Ansprechschwelle bestimmt werden. Somit kann der Ultraschallsensor, insbesondere eine Detektionsreichweite des Ultraschallsensors, besonders schnell und einfach an Umgebungsbedingungen, insbesondere an das Klima in der Umgebung, angepasst werden.

Auch kann es vorgesehen sein, dass ein aktueller Luftdruck auf die gleiche Weise wie die aktuelle Luftfeuchtigkeit bestimmt wird und die Dämpfung des Ultraschallsignals in dem Umgebungsbereich anhand der aktuellen Temperatur, der aktuellen Luftfeuchtigkeit und des aktuellen Luftdruckes bestimmt beziehungsweise berechnet wird.

Die Erfindung betrifft außerdem ein Fahrerassistenzsystem für ein Kraftfahrzeug zum Erfassen von Objekten in einem Umgebungsbereich des Kraftfahrzeugs mit einem Ultraschallsensor zum Aussenden eines Ultraschallsignals in den Umgebungsbereich und/oder zum Empfangen des an dem Objekt reflektierten Ultraschallsignals. Das Fahrerassistenzsystem umfasst außerdem eine Auswerteeinrichtung zum Bestimmen einer Dämpfung des Ultraschallsignals in dem Umgebungsbereich des Kraftfahrzeugs und einen Temperatursensor zum Erfassen einer aktuellen Temperatur in dem Umgebungsbereich des Kraftfahrzeugs. Darüber hinaus umfasst das Fahrerassistenzsystem eine Erfassungseinrichtung, welche dazu ausgelegt ist, eine aktuelle Position des Kraftfahrzeugs zu erfassen. Die Auswerteeinrichtung des Fahrerassistenzsystems ist dazu ausgelegt, anhand der aktuellen Position aus bereitgestellten Wetterdaten eine aktuelle Luftfeuchtigkeit in dem Umgebungsbereich zu bestimmen und anhand der aktuellen Luftfeuchtigkeit und der aktuellen Temperatur die Dämpfung des Ultraschallsignals in dem Umgebungsbereich zu bestimmen. Das Fahrerassistenzsystem ist vorzugsweise als ein Parkassistenzsystem ausgeführt, dessen Ultraschallsensor mittels der erfassten Dämpfung besonders einfach an die Umgebungsbedingungen angepasst werden kann.

Ein erfindungsgemäßes Kraftfahrzeug umfasst ein erfindungsgemäßes Fahrerassistenzsystem. Das Kraftfahrzeug ist insbesondere als ein Personenkraftwagen ausgestaltet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Mit Angaben "oben", "unten", "vorne", "hinten", "horizontal", "vertikal", "seitlich" etc. sind bei bestimmungsgemäßem Gebrauch und bestimmungsgemäßem Anordnen des Ultraschallsensors an dem Kraftfahrzeug und einen dann vor dem Kraftfahrzeug stehenden und in Richtung des Kraftfahrzeugs blickenden Beobachter gegebenen Positionen und Orientierungen angegeben.

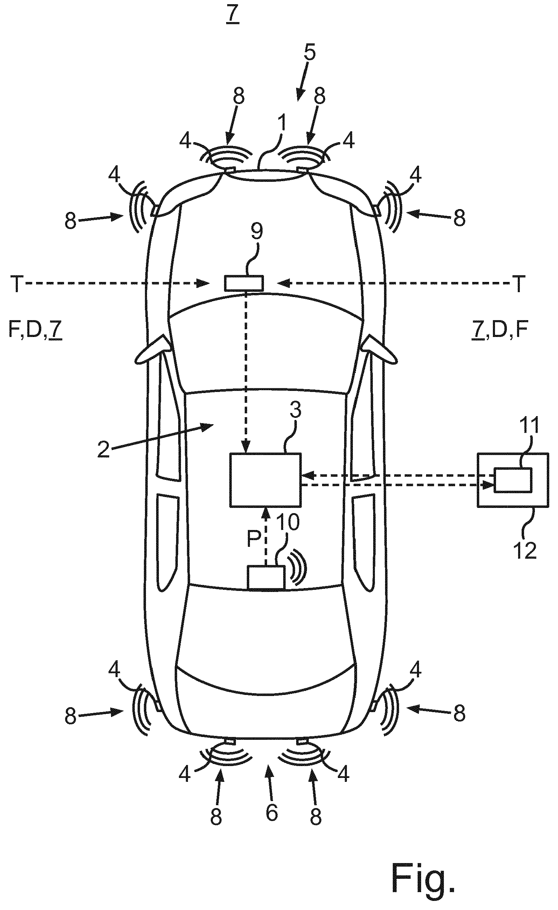

Weitere Merkmale der Erfindung ergeben sich aus den Ansprüchen, der Figur und der Figurenbeschreibung. Die vorstehend in der Beschreibung genannten Merkmale und Merkmalskombinationen sowie nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in der Figur nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Im Folgenden wird die Erfindung nun anhand eines bevorzugten Ausführungsbeispiels wie auch unter Bezugnahme auf die beigefügte Zeichnung näher erläutert.

Es zeigt die einzige Fig. eine schematische Darstellung einer Ausführungsform eines erfindungsgemäßen Kraftfahrzeugs.

Die Fig. zeigt ein Kraftfahrzeug 1 gemäß einer Ausführungsform der vorliegenden Erfindung. Das Kraftfahrzeug 1 ist im vorliegenden Fall als Personenkraftwagen ausgebildet. Das Kraftfahrzeug 1 weist ein Fahrerassistenzsystem 2 auf, welches beispielsweise als ein Parkassistenzsystem ausgestaltet sein kann. Das Fahrerassistenzsystem 2 umfasst eine Auswerteeinrichtung 3, welche beispielsweise durch ein elektronisches Steuergerät des Kraftfahrzeugs 1 gebildet sein kann. Darüber hinaus umfasst das Fahrerassistenzsystem 2 zumindest einen Ultraschallsensor 4.

Hier umfasst das Fahrerassistenzsystem 2 acht Ultraschallsensoren 4, von welchen vier Ultraschallsensoren 4 an einem Frontbereich 5 und vier weitere Ultraschallsensoren 4 an einem Heckbereich 6 des Kraftfahrzeugs 1 angeordnet sind. Die Ultraschallsensoren 4 sind insbesondere dazu ausgebildet, ein Objekt in einem Umgebungsbereich 7 des Kraftfahrzeugs 1 zu erfassen. Des Weiteren können die Ultraschallsensoren 4 auch dazu ausgelegt sein, einen Abstand des Kraftfahrzeugs 1 zu dem Objekt in dem Umgebungsbereich 7 des Kraftfahrzeugs 1 zu bestimmen. Zum Erfassen des Objektes in dem Umgebungsbereich 7 sendet dazu jeder der Ultraschallsensoren 4 ein Ultraschallsignal 8 in den Umgebungsbereich 7 aus und empfängt das an dem Objekt reflektierte Ultraschallsignal 8. Zur Abstandsbestimmung kann von den Ultraschallsensoren 4 zusätzlich eine Laufzeit des Ultraschallsignals 8, also eine Zeit zwischen dem Aussenden des Ultraschallsignals 8 und dem Empfangen des reflektierten Ultraschallsignals 8, gemessen werden.

Die Genauigkeit der Abstandsbestimmung zwischen dem Objekt und dem Kraftfahrzeug 1 ist insbesondere abhängig von einer Dämpfung D, welche das Ultraschallsignal 8 in dem Umgebungsbereich 7 des Kraftfahrzeugs 1 erfährt und welche beispielsweise eine Detektionsreichweite des Ultraschallsensors 4 beeinflusst. Um die Detektionsreichweite des Ultraschallsignals 8 an die Dämpfung D anpassen zu können, muss die Dämpfung D in dem Umgebungsbereich 7 bestimmt werden. Die Dämpfung D in dem Umgebungsbereich 7 ist dabei abhängig von den Umgebungsbedingungen im Umgebungsbereich 7 und kann dort um einen Faktor zehn variieren und beispielsweise in Abhängigkeit von den Umgebungsbedingungen einen Wert zwischen 0,37 dB/m und 3,98 dB/m annehmen.

Die Dämpfung D wird insbesondere von einer Temperatur T im Umgebungsbereich 7 des Kraftfahrzeugs 1 beeinflusst. Zur Erfassung der Temperatur T im Umgebungsbereich 7 weist das Fahrerassistenzsystem 2 einen fahrzeugseitigen Temperatursensor 9 beziehungsweise einen Temperaturfühler auf. Der fahrzeugseitige Temperatursensor 9 erfasst die aktuelle Temperatur T im Umgebungsbereich 7 des Kraftfahrzeugs 1 und stellt diese der Auswerteeinrichtung 3 des Kraftfahrzeugs 1 bereit. Darüber hinaus ist die Dämpfung D abhängig von einer Luftfeuchtigkeit F im Umgebungsbereich 7 des Kraftfahrzeugs 1. So erfährt das Ultraschallsignal 8 beispielsweise in dem Umgebungsbereich 7 bei einer hohen Temperatur T, beispielsweise 40 Grad, und einer niedrigen Luftfeuchtigkeit F, beispielsweise 20 % rel. F, eine höhere Dämpfung D, beispielsweise 2,4 dB/m, als in dem Umgebungsbereich 7 bei einer hohen Temperatur T, beispielsweise 40 Grad, und einer hohen Luftfeuchtigkeit F, beispielsweise 90 % rel. F. Dort beträgt die Dämpfung D beispielsweise nur 1 dB/m.

Die Luftfeuchtigkeit F wird jedoch nicht direkt von einem fahrzeugseitigen Sensor gemessen. Die Luftfeuchtigkeit F im Umgebungsbereich 7 des Kraftfahrzeugs 1 wird vielmehr anhand von Wetterdaten 11, welche ein aktuelles Wetter beziehungsweise ein aktuelles Klima an einer Position P des Kraftfahrzeugs 1 charakterisieren, bestimmt. Zur Bestimmung der Position P des Kraftfahrzeugs 1 weist das Kraftfahrzeug 1 hier eine Erfassungseinrichtung 10 in Form von einem GPS-Gerät auf, welches dazu ausgelegt ist, in an sich bekannter Weise die Position P des Kraftfahrzeugs 1 in geographischen Koordinaten zu bestimmen. Die erfasste aktuelle Position P des Kraftfahrzeugs 1 wird ebenfalls der Auswerteeinrichtung 3 bereitgestellt. Anhand der aktuellen Position P ermittelt die Auswerteeinrichtung 3 die aktuelle Luftfeuchtigkeit F aus den Wetterdaten 11, welche beispielsweise in einer Datenbank 12 bereitgestellt sind. Die Datenbank 12 kann sowohl eine fahrzeuginterne Datenbank und/oder eine fahrzeugexterne Datenbank, beispielsweise eine internetbasierte Datenbank, sein.

Bei einer internetbasierten Datenbank 12 werden die Wetterdaten, und damit auch die Wetterdaten 11 an der Position P, ständig aktualisiert. Somit ist es ausreichend, lediglich die aktuelle Position P des Kraftfahrzeugs 1 zu erfassen und anhand der Position P aus der ständig aktualisierten Wetterdaten 11 der Datenbank 12 die aktuelle Luftfeuchtigkeit F in dem Umgebungsbereich 7 auszulesen.

Es kann aber auch vorgesehen sein, dass die Wetterdaten 11 in einer Jahreswetterkarte in einer fahrzeuginternen und/oder fahrzeugexternen Datenbank hinterlegt sind, welche durch die Auswerteeinrichtung 3 ausgelesen werden kann. In dieser Jahreswetterkarte sind Luftfeuchtigkeitswerte an einer bestimmten Position über einen Jahresverlauf und beispielsweise auch über einen Tagesverlauf angezeigt. Um die aktuelle Luftfeuchtigkeit F aus der Jahreswetterkarte zu extrahieren, wird zusätzlich von dem Kraftfahrzeug 1 noch eine aktuelle Uhrzeit sowie ein aktuelles Kalenderdatum erfasst. Somit kann die zu der erfassten aktuellen Position P gehörige Jahreswetterkarte identifiziert werden und der zugehörige Luftfeuchtigkeitswert aus dem Jahresverlauf und/oder dem Tagesverlauf des in der Jahreswetterkarte dargestellten Wetters, also bei dem entsprechenden Kalenderdatum und/oder der entsprechenden Uhrzeit, herausgelesen werden. Durch das Bereitstellen der Jahreswetterkarte ergibt sich der Vorteil, dass die Wetterdaten 11 auch dann bereitgestellt werden können, wenn sich das Kraftfahrzeug 1 beispielsweise in einem Funkloch befindet und keinen Internetzugriff, beispielsweise auf eine internetbasierte Wetterdatenbank, hat.

Anhand der aktuellen Luftfeuchtigkeit F und der aktuellen Temperatur T kann somit die aktuelle Dämpfung D im Umgebungsbereich 7 des Kraftfahrzeugs 1 auf besonders einfache Weise bestimmt werden Zusätzlich kann zu der Luftfeuchtigkeit F aus den Wetterdaten 11 noch ein aktueller Luftdruck ausgelesen werden und bei der Bestimmung der Dämpfung D in dem Umgebungsbereich 7 berücksichtigt werden.

Basierend auf der bestimmten Dämpfung D kann beispielsweise die Detektionsreichweite des Ultraschallsensors 4 angepasst werden. Dazu wird insbesondere eine Ansprechschwelle für den Ultraschallsensor 4 bestimmt. Die Ansprechschwelle ist dabei eine charakteristische Signalstärke eines reflektierten Ultraschallsignals 8 in einer bestimmungsgemäßen Einbaulage am Kraftfahrzeug 1, welche das reflektierte Ultraschallsignal 8 nach einer Reflexion an einer Fahrbahn des Kraftfahrzeugs 1 aufweist. Da die Fahrbahn des Kraftfahrzeugs 1 in der Regel nicht erfasst werden soll, ist es zweckmäßig, dass der Ultraschallsensor 4 auf die Reflexion an der Fahrbahn, also ein sogenanntes Bodenecho, nicht reagiert.

Dazu können beispielsweise Schwellwerte bei vorbestimmten Dämpfungswerten vorgegeben werden und beispielsweise in einer Liste oder einer Kennlinie bereitgestellt werden. In Abhängigkeit der bestimmten Dämpfung D kann dann der entsprechende Schwellwert als die aktuelle Ansprechschwelle ausgewählt und für den Ultraschallsensor 4 vorgegeben werden. Somit kann die Detektionsreichweite des Ultraschallsensors 4 maximiert werden, ohne dass Bodenechos als Objekte im Umgebungsbereich 7 des Kraftfahrzeugs 1 erfasst werden.

## Patentansprüche

1. Verfahren zum Bestimmen einer Dämpfung (D) eines Ultraschallsignals (8) eines Ultraschallsensors (4) für ein Kraftfahrzeug (1) in einem Umgebungsbereich (7) des Kraftfahrzeugs (1), wobei bei dem Verfahren mittels eines fahrzeugseitigen Temperatursensors (9) eine aktuelle Temperatur (T) in dem Umgebungsbereich (7) des Kraftfahrzeugs (1) erfasst wird,
**dadurch gekennzeichnet, dass**
eine aktuelle Position (P) des Kraftfahrzeugs (1) erfasst wird, anhand der aktuellen Position (P) aus bereitgestellten Wetterdaten (11) eine aktuelle Luftfeuchtigkeit (F) in dem Umgebungsbereich (7) des Kraftfahrzeugs (1) bestimmt wird und anhand der aktuellen Luftfeuchtigkeit (F) und der aktuellen Temperatur (T) die Dämpfung (D) des Ultraschallsignals (8) in dem Umgebungsbereich (7) bestimmt wird.

2. Verfahren nach Anspruch 1,
**dadurch gekennzeichnet, dass**
die aktuelle Position (P) des Kraftfahrzeugs (1) mittels eines globalen Positionsbestimmungssystems bestimmt wird.

3. Verfahren nach Anspruch 1 oder 2,
**dadurch gekennzeichnet, dass**
mittels einer internetbasierten, die Wetterdaten (11) bereitstellenden Wetterdatenbank (12) die aktuelle Luftfeuchtigkeit (F) an der aktuellen Position (P) bestimmt wird.

4. Verfahren nach einem der vorhergehenden Ansprüche,
**dadurch gekennzeichnet, dass**
zusätzlich ein aktuelles Kalenderdatum und/oder eine aktuelle Uhrzeit erfasst wird.

5. Verfahren nach Anspruch 4,
**dadurch gekennzeichnet, dass**
eine fahrzeuginterne und/oder fahrzeugexterne Wetterdatenbank (12) bereitgestellt wird, innerhalb welcher zu vorbestimmten Datensätzen Luftfeuchtigkeitswerte vorgegeben werden, wobei jeder Datensatz eine vorbestimmte Position sowie eine vorbestimmte Uhrzeit und/oder ein vorbestimmtes Kalenderdatum umfasst, und anhand der erfassten aktuellen Position (P) sowie der erfassten aktuellen Uhrzeit und/oder des erfassten aktuellen Kalenderdatums der zugehörige Luftfeuchtigkeitswert als die aktuelle Luftfeuchtigkeit (F) bestimmt wird.

6. Verfahren nach Anspruch 5,
**dadurch gekennzeichnet, dass**
in der fahrzeuginternen und/oder fahrzeugexternen Datenbank (12) in jedem Datensatz zusätzlich ein vorbestimmter Temperaturwert vorgegeben wird, wobei zusätzlich anhand der erfassten Temperatur (T) der dem entsprechenden Datensatz zugehörige Luftfeuchtigkeitswert als die aktuelle Luftfeuchtigkeit (F) bestimmt wird.

7. Verfahren nach einem der vorhergehenden Ansprüche,
**dadurch gekennzeichnet, dass**
in Abhängigkeit der bestimmten Dämpfung (D) des Ultraschallsignals (8) eine Detektionsreichweite des Ultraschallsensors (4) in dem Umgebungsbereich (7) zum Erfassen von Objekten in dem Umgebungsbereich (7) des Kraftfahrzeugs (1) angepasst wird.

8. Verfahren nach Anspruch 7,
**dadurch gekennzeichnet, dass**
die Detektionsreichweite angepasst wird, indem in Abhängigkeit der bestimmten Dämpfung (D) eine Ansprechschwelle für den Ultraschallsensor (4) bestimmt wird, wobei das von dem Ultraschallsensor (4) empfangende Ultraschallsignal (8) nur ausgewertet wird, wenn das Ultraschallsignal (8) die Ansprechschwelle überschreitet.

9. Verfahren nach Anspruch 8,
**dadurch gekennzeichnet, dass**
als die Ansprechschwelle eine Signalstärke für das Ultraschallsignal (8) bestimmt wird, welche das an einer Fahrbahn des Kraftfahrzeugs (1) reflektierte Ultraschallsignal (8) des Ultraschallsensors (4) in einer bestimmungsgemäßen Einbaulage des Ultraschallsensors (4) am Kraftfahrzeug (1) bei der bestimmten Dämpfung (D) aufweist.

10. Verfahren nach Anspruch 8 oder 9,
**dadurch gekennzeichnet, dass**
für vorbestimmte Dämpfungswerte Schwellwerte vorgegeben werden und in Abhängigkeit der bestimmten Dämpfung (D) der zugehörige Schwellwert ausgewählt und als die Ansprechschwelle für den Ultraschallsensor (4) bestimmt wird.

11. Fahrerassistenzsystem (2) für ein Kraftfahrzeug (1) zum Erfassen von Objekten in einem Umgebungsbereich (7) des Kraftfahrzeugs (1) mit einem Ultraschallsensor (4) zum Aussenden eines Ultraschallsignals (8) in den Umgebungsbereich (7) und/oder zum Empfangen des an dem Objekt reflektierten Ultraschallsignals (8), eine Auswerteeinrichtung (3) zum Bestimmen einer Dämpfung (D) des Ultraschallsignals (8) in dem Umgebungsbereich (7) des Kraftfahrzeugs (1) und einem Temperatursensor (9) zum Erfassen einer aktuellen Temperatur (T) in dem Umgebungsbereich (7) des Kraftfahrzeugs (1),
**dadurch gekennzeichnet, dass**
eine Erfassungseinrichtung (10) des Fahrerassistenzsystems (2) dazu ausgelegt ist, eine aktuelle Position (P) des Kraftfahrzeugs (1) zu erfassen und die Auswerteeinrichtung (3) des Fahrerassistenzsystems (2) dazu ausgelegt ist, anhand der aktuellen Position (P) aus bereitgestellten Wetterdaten (11) eine aktuelle Luftfeuchtigkeit (F) in dem Umgebungsbereich (7) des Kraftfahrzeugs (1) zu bestimmen und anhand der aktuellen Luftfeuchtigkeit (F) und der aktuellen Temperatur (T) die Dämpfung (D) des Ultraschallsignals (8) in dem Umgebungsbereich (7) zu bestimmen.

12. Kraftfahrzeug (1) mit einem Fahrerassistenzsystem (2) nach Anspruch 11.
